# EUROPEAN PATENT SPECIFICATION

(11) **EP 4 668 713 B1**
(45) Date of publication and mention of the grant of the patent: **26.08.2026**
(21) Application number: 24182750.0
(22) Date of filing: 18.06.2024
(51) Int. Cl.: H04L 67/02, H04L 67/563, H04L 67/63

(54) **DETERMINING WHICH SERVICE WILL PROCESS A REQUEST FOR A RESOURCE**
BESTIMMUNG, WELCHER DIENST EINE ANFRAGE NACH EINER RESSOURCE VERARBEITET
DÉTERMINATION DU SERVICE QUI TRAITE UNE DEMANDE POUR UNE RESSOURCE

(43) Date of publication of application: 24.12.2025
(73) Proprietor: SAP SE, 69190 Walldorf (DE)
(72) Inventor: MANOV, Milen Vladimirov, 69190 Walldorf (DE); TSIMASHCHUK, Vasil, 69190 Walldorf (DE)
(74) Representative: Müller-Boré & Partner Patentanwälte PartG mbB

(56) References cited:
- CA-A1- 2 704 461
- US-A1- 2020 336 553
- US-B2- 12 001 894

## Description

The technical field of the application relates to computer networking. More specifically, aspects relate to application layer routing and management of computing resources in a computer network.

It may be a problem to transition from a first type of service to a second type of service (e.g., network service). More specifically, it may be a problem to transition (e.g., upgrade) one or more services having a first type (e.g., monolithic) to one or more services having a second type (e.g., service-oriented application, macroservice or microservice), wherein the first type is different from the second type. The one or more services having the first type may have substantially similar functionality in comparison to the one or more services having the second type. The first type and/or the second type may be or correspond to a service architecture.

In the context of the present disclosure, a service may be implemented as a network service, more specifically as a web service. The service may be a software system designed to support interoperable machine-to-machine interaction over a network. The service may listen at a port, e.g., a transport layer port such as a transmission control protocol (TCP) port or user datagram protocol (UDP) port. The service may serve web documents such as markup language (e.g., hypertext markup language or extensible markup language) or JavaScript object notation (JSON).

Difficulties in transitioning from the first type of service to the second type of service may arise, in particular, when the first type of service provides access to functionality and/or data that is not available via the second type of service. Hence, it may be a problem to determine which service of a plurality of services will process a request for a resource, particularly when a first service of the plurality of services has the second type and another service of the plurality of services has the first type.

CA 2 704 461, Moore, describes a system for providing a web service on a network of addressable nodes, said web service comprising microservices, said system comprising: (a) a load balancer configured for routing a request from a node for a microservice to one of multiple virtual addresses, each virtual address corresponding to a unique microservice, and (b) physical nodes associated with each virtual address, each physical node comprising microservices, each microservice being one of multiple individually-addressable microservices constituting a web service.

The invention is defined by the appended claims. According to a first aspect, a computer implemented method for determining which service of a plurality of services will process a request for a resource is provided. The method comprises receiving a request for a resource. The method further comprises determining whether to send the request to a first service of the plurality of services. When it is determined to send the request to the first service, the method further comprises: sending the request to the first service; assessing, by the first service whether the first service can process the request; when the first service can process the request, processing, by the first service the request. When the first service cannot process the request, the method further comprises responding, by the first service, to the request, routing the request to another service of the plurality of services based on the response.

Determining which service of a plurality of services will process a request for a resource may be carried out when transitioning from a first type of service to a second type of service.

One or more services of the plurality of services may be implemented as web services. Each service of the plurality of services is a network service, and optionally a web service. The service may run at the application layer of the open systems interconnection (OSI) model. The service may provide one or more of the following: data storage, data manipulation, presentation, communication; the network service may use or provide functionality via at least one application layer protocol.

The resource may be a physical resource, e.g., a real-world object such as a book, a person, a place. In some cases, the resource may be data, e.g., data on a webpage. The resource may be a workflow instance or a component of a workflow instance. The resource is on a computer network, e.g., the Internet or a private network, such as a computer file system or an intranet.

The request may be for a single resource or for a plurality of resources.

Services of the plurality of services may be implemented on the same computer system or on different computer systems. In some cases, the services of the plurality of services may be implemented on different cloud hyperscalers. A hyperscaler may be able scale accordingly (e.g., add computing, memory, networking, or storage resources to a given node or set of nodes) as increased demand is added to the system. Examples of hyperscalers are Amazon AWS and Microsoft Azure.

It may be advantageous to assess, by the first service, whether the first service can process the request rather than performing the assessment at the routing component because such an assessment could impose significant storage and/or processing requirements on the routing component. Imposing such significant storage and/or processing requirements on the routing component could limit the capability of the routing component to service requests and/or route efficiently.

For example, performing the assessment at the routing component could require the routing component to store information about resources registered with the first service and/or definition identifiers that can be processed by the first service. In addition or alternatively, the routing component could be required to store information about resources registered with other services of the plurality of services and/or definition identifiers that can be processed by the other services. There may be at least 100, at least 500, at least 1000, or at least 5000 definition identifiers associated with each service of the plurality of services. The definition identifiers that can be processed by the one of the services of the plurality of services (e.g., the first service) may change frequently, e.g., for about every 10 requests (e.g., on average) processed by the service or for about every 50 requests (e.g., on average) processed by the service a definition identifier may be changed.

Updating the definition identifiers that can be processed by the respective services at the routing component may reduce the efficiency of the routing component, particularly while the routing component is being updated. In addition, storing the information regarding which definition identifiers can be handled by which service at the routing component may significantly increase storage burdens at the routing component and make the routing component less efficient at accomplishing other tasks. Moreover, reducing the data (e.g., business logic about services) stored at the routing component and/or reducing the decisions that need to be made by the routing component may be desirable from a software design perspective, may make the routing component easier to maintain and may improve the performance of the routing component.

A definition identifier may refer to a definition identifier of a workflow or an identifier of a workflow definition. Each request for a resource that is received may include a definition identifier. As discussed above, each service of the plurality of services may include definition identifiers that can be processed by the respective service. At least some of the definition identifiers of the first service may differ from the definition identifiers of the other services of the plurality of services. Accordingly, at least some of the definitions of the first service (e.g., definitions corresponding to differing definition identifiers) may differ from the definitions of the other services of the plurality of services. Definitions identified by definition identifiers that can be processed by the first service may be in a first language (e.g., Subbuild Process Automation Format) and definition identifiers that cannot be processed by the first service may be in a second language (e.g., the second language may be based on or the second language may be derived from Business Process Modeling Notation). The first language and/or the second language may be a business process modeling language.

The first language may provide a flat structure and may be optimized for rendering elements in user interfaces.

The second language may be based on extensible markup language (XML) and/or the second language provide a hierarchical structure. The second language may be suitable for nesting hierarchically relevant entities (e.g., events or tasks), that is, nesting relevant entities in a hierarchy. The second language might not be optimized for rendering elements in user interfaces.

Sample code in the first language (Subbuild Process Automation Format) is provided in listing 1 below:

```
 {
     "contents": {
            "71cc0270-b665-4c19-8e43-a5371b80b8ae": {
                   "classDefinition": "com.sap.bpm.wfs.Model",
                   "id": "automationTaskWorkflow",
                   "subject": "automationTaskWorkflow",
                   "name": "AutomationTaskWorkflow",
                   "documentation": "Workflow having Automation Task",
                   "projectId": "projectId",
                   "projectVersion": "1.0.0",
                   "artifactId": "3382dc1e-594d-486b-a63c-7f63f222c52b",
                   "lastIds": "62d7f4ed-4063-4c44-af8b-39050bd44926",
                   "events": {
                         "11a9b5ee-17c0-4159-9bbf-454dcfdcd5c3": {
                                "name": "StartEvent1"
                         },
                         "2798f4e7-bc42-4fad-a248-159095a2f40a": {
                                "name": "EndEvent1"
                         }
                   },
                   "activities": {
                         "900abace-e446-4eaa-bd99-15480e29760d": {
                                "name": "Automation Task based on Kafka"
                         }
                   },
                   "sequenceFlows": {
                         "c6b99f32-5fe6-4ab6-b60a-80fba1b9ae0f": {
                                "name": "SequenceFlow1"
                         },
                         "6973190a-d47a-4dbe-8732-355e24594074": {
                                "name": "SequenceFlow2"
                         }
                   },
                   "diagrams": {
                         "42fa7a2d-c526-4a02-b3ba-49b5168ba644": {}
                   }
            },
            "11a9b5ee-17c0-4159-9bbf-454dcfdcd5c3": {
                   "classDefinition": "com.sap.bpm.wfs.StartEvent",
                   "id": "startevent1",
                   "name": "StartEvent1"
            },
            "2798f4e7-bc42-4fad-a248-159095a2f40a": {
                   "classDefinition": "com.sap.bpm.wfs.EndEvent",
                   "id": "endevent1",
                   "name": "EndEvent1"
            },
            "c6b99f32-5fe6-4ab6-b60a-80fba1b9ae0f": {
                   "classDefinition": "com.sap.bpm.wfs.SequenceFlow",
                   "id": "sequenceflow1",
                   "name": "SequenceFlow1",
                   "sourceRef": "11a9b5ee-17c0-4159-9bbf-454dcfdcd5c3",
                   "targetRef": "900abace-e446-4eaa-bd99-15480e29760d"
            },
            "42fa7a2d-c526-4a02-b3ba-49b5168ba644": {
                   "classDefinition": "com.sap.bpm.wfs.ui.Diagram",
                   "symbols": {
                         "df898b52-91e1-4778-baad-2ad9a261d30e": {},
                         "53e54950-7757-4161-82c9-afa7e86cff2c": {},
                         "6bb141da-d485-4317-93b8-e17711df4c32": {},
                         "3fe81b1f-f956-4f54-acaa-b08d7e1e4a5f": {},
                         "ae7c0a59-2514-45e5-b886-075c98853f65": {}
            "df898b52-91e1-4778-baad-2ad9a261d30e": {
                   "classDefinition": "com.sap.bpm.wfs.ui.StartEventSymbol",
                   "x": 100,
                   "y": 100,
                   "width": 32,
                   "height": 32,
                   "object": "11a9b5ee-17c0-4159-9bbf-454dcfdcd5c3"
            },
            "53e54950-7757-4161-82c9-afa7e86cff2c": {
                   "classDefinition": "com.sap.bpm.wfs.ui.EndEventSymbol",
                   "x": 340,
                   "y": 100,
                   "width": 35,
                   "height": 35,
                   "object": "2798f4e7-bc42-4fad-a248-159095a2f40a"
            },
            "6bb141da-d485-4317-93b8-e17711df4c32": {
                   "classDefinition": "com.sap.bpm.wfs.ui.SequenceFlowSymbol",
                   "points": "116,116.375 236.24147286593848,116.375",
                   "sourceSymbol": "df898b52-91e1-4778-baad-2ad9a261d30e",
                   "targetSymbol": "3fe81b1f-f956-4f54-acaa-b08d7e1e4a5f",
                   "object": "c6b99f32-5fe6-4ab6-b60a-80fba1b9ae0f"
            },
            "62d7f4ed-4063-4c44-af8b-39050bd44926": {
                   "classDefinition": "com.sap.bpm.wfs.LastIDs",
                   "sequenceflow": 2,
                   "startevent": 1,
                   "endevent": 1,
                   "servicetask": 1
            },
            "900abace-e446-4eaa-bd99-15480e29760d": {
                   "classDefinition": "com.sap.bpm.wfs.AutomationTask",
                   "id": "automationtask1",
                   "name": "Automation Task based on Kafka",
                   "artifactId": "660d4916-4983-4160-84b8-07cdbbae1447",
                   "environmentId": "default",
                   "project": {
                         "id": "projectId",
                         "version": {
                                "major": 1,
                                "minor": 2,
                                "patch": 3
                         }
                   },
                   "requestVariable": "${context.request}",
                   "responseVariable": "${context.response}"
            },
            "3fe81b1f-f956-4f54-acaa-b08d7e1e4a5f": {
                   "classDefinition": "com.sap.bpm.wfs.ui.AutomationTaskSymbol",
                   "x": 186.24147286593848,
                   "y": 86.75,
                   "width": 100,
                   "height": 60,
                   "object": "900abace-e446-4eaa-bd99-15480e29760d"
            },
            "6973190a-d47a-4dbe-8732-355e24594074": {
                   "classDefinition": "com.sap.bpm.wfs.SequenceFlow",
                   "id": "sequenceflow2",
                   "name": "SequenceFlow2",
                   "sourceRef": "900abace-e446-4eaa-bd99-15480e29760d",
                   "targetRef": "2798f4e7-bc42-4fad-a248-159095a2f40a"
            },
            "ae7c0a59-2514-45e5-b886-075c98853f65": {
                   "classDefinition": "com.sap.bpm.wfs.ui.SequenceFlowSymbol",
                   "points": "236.24147286593848,117.125 357.5,117.125",
                   "sourceSymbol": "3fe81b1f-f956-4f54-acaa-b08d7e1e4a5f",
                   "targetSymbol": "53e54950-7757-4161-82c9-afa7e86cff2c",
                   "object": "6973190a-d47a-4dbe-8732-355e24594074"
```

### Listing 1

The Subbuild process automation format code in listing 1 includes a start event, a service (i.e., automation) task and an end event. The start event may start a workflow instance, the service task may be a REST request, the end event may end the workflow instance. The request for the resource may include or may be implemented as the service task.

Hence, the first service may process requests using the first language while the other services process requests using the second language. It may be possible to process some requests in either language, while other requests may require processing using the first language and yet other requests may require processing in the second language. Put another way, there may be three different types of requests: a first type of request that may be processed in either the first language or the second language, a second type of request that requires processing in the first language (both the first and second types may be processed by the first service), and a third type of request that require processing in the second language (the third type of request may be processed by the other service). In addition, the first service may offer further functionality that is not available in the other services. Requests requiring the further functionality may be processed by the first service.

Assessing, by the first service, whether the first service can process the request may include determining whether the resource referred to by the request is registered with the first service. When the resource referred to by the request is registered by the first service then it may be that the first service can process the request when the resource referred to by the request is not registered with the first service it may be that the first service cannot process the request. The splitting of processing among the services of the plurality of services as described above may ease the transition from services having the monolithic type to services having the microservice type and reduce the impact of the transition on clients when requests are processed.

The first language (e.g., subbuild process automation format) may have various advantages in comparison to the second language (e.g., a language based on business process modeling notation).

One advantage of the first language in comparison to the second language may be a strong type system. In some cases, the second language does not have a strong type system, more specifically, the second language may have a weak type system. In particular, the first language may have a strong type system (i.e., strong typing) achieved by means of input and output mappings of data to and from tasks of a workflow. A strong type system might not be included in the second language or might need to be added as an extension. Strong typing (e.g., in the context of the first language) may include more precise validation of data when a workflow is being designed or created, thereby reducing the time required to create the workflow and making workflow design and creation more efficient. Strong typing may further include precise validation of data during runtime (e.g., during execution of the workflow), so that if some data has been modeled as expected by a designer of the workflow and is not available as a result of a task of the workflow, there will be an error. The generation of the error may make it easier to identify and resolve problems with the workflow during runtime.

Another advantage of the first language in comparison to the second language may be that certain types of workflow tasks are only available for the second language.

Another advantage of the first language in comparison to the second language may be enhancements or improvements in the behaviors (i.e. methods) which are available for both services having the monolithic type (e.g., the other services) as well as for services having the microservice type (e.g., the first service). The behaviors available for both types of services may be compatible, such that clients able to use behaviors available for services having the monolithic type will not fail when using behaviors available for services having the microservices type.

When the first service cannot process the request, the first service responds to the request. In this case, the first service responds to the request by sending a response to the routing component. The response to the request may include an indication that the first service cannot process the request.

When the first service cannot process the request, an indication of the request may be recorded, e.g., in the cache. The recorded indication of the request may indicate that the first service cannot process the request. The indication of the request may be recorded based on the response to the request by the first service. For example, the response to the request by the first service may include an alias of another service of the plurality of services and the alias may be recorded along with the URI of the request. The indication of the request may be recorded (e.g., the cache may be populated) after routing the request to the other service of the plurality of services based on the response. Alternatively, the indication of the request may be recorded upon determining that the first service cannot process the request. It may be unnecessary to invalidate the cache, e.g., because transferring definition identifiers from one of the other services of the plurality of services to the first service (thereby enabling the first service to process requests corresponding to the definition identifiers) would decrease the performance of the first service.

It may be that the indication of the request is only recorded when the first service cannot process the request, i.e., the indication of the request is not recorded when the first service can process the request.

Receiving the request comprises receiving the request at a routing component. The routing component may also be referred to as a middleware component. The routing component may include one or more of the following: a load balancer, a reverse proxy, and application programming interface (API) Gateway. The routing component may be a single point of entry for the plurality of services, such that a request for one of the services of the plurality of services is received by the routing component before being routed to the one of the services.

For example, the request may be received at one computing device from another computing device. In addition or alternatively, the request may be a client request. Specifically, the request may be sent from a client computing device to a computing device configured to execute the routing component. In other words, the requestor or originator of the request may be the client computing device.

After the request is processed by a service of the plurality of services (e.g., the first service or the other service), a result (e.g., a result of the processing) may be sent to the client computing device, e.g., via the routing component.

The step of determining whether to send the request to the first service of the plurality of services is carried out at the routing component. Accordingly, when it is determined to send the request of the first service, the request is sent from the routing component to the first service. In addition or alternatively, when the first service cannot process the request the first service responds to the request by sending a response to the routing component. The routing component routes the request to the other service of the plurality of services based on the response from the first service.

Carrying out the routing of the request to the other service of the plurality of services based on the response of the first service at the routing component (rather than at the first service) may have the advantage that it is not necessary for the first service to keep track which services can process of definition identifiers, as well as methods and properties (i.e., variables) corresponding to the definition identifiers that cannot be processed by the first service.

The routing component may function at the application layer of the OSI model. In addition or alternatively, the routing component may send and/or communications from other computing devices provided in an application layer protocol. For example, the routing component may focus on or process application layer data of network traffic that passes through the routing component.

Alternatively, the routing component may function at the transport layer. Hence, the routing component may focus on or process transport layer data of network traffic that passes through the routing component without focusing on or processing data at higher levels of the OSI model.

The OSI model describes 7 layers that computer systems use to communicate over a computer network. The application layer is the seventh layer of the OSI model. Other layers of the OSI model include the physical layer (layer 1), the data link layer (layer 2), the network layer (layer 3), the transport layer (layer 4), the session layer (layer 5), and the presentation layer (layer 6).

In some cases, the routing component may distribute requests sent over the computer network across services including the plurality of services. The routing component may reside or be located in front of the plurality of services such that communications between other computing devices (e.g., the client computing device) may pass through the routing component on their way to a service of the plurality of services.

The routing component may perform load-balancing and/or the routing component may include one or more load-balancing algorithms. They routing component may provide secure socket layer (SSL) and/or transport layer security (TLS) termination, reducing computational load on computing devices hosting services by handling SSL and/or TLS decryption.

The load-balancing algorithms may be static (e.g., independent of service state) or dynamic (e.g., dependent on service state). For example, the routing component may include a round-robin algorithm, a sticky round-robin algorithm, a weighted round-robin algorithm, an Internet Protocol (IP)/Uniform Resource Identifier (URI) hash algorithm, a least connections algorithm, a least response time algorithm. In the context of the present application, a URI may be a uniform resource locator (URL).

Using the round-robin algorithm, requests may be sent sequentially to different services. Using the sticky round-robin algorithm, subsequent requests from a particular client computing device go to the same service that handled an initial request from the particular client computing device. Using the weighted round-robin algorithm, weights may be assigned to each service, determining the proportion of requests each service handles. Using the IP/URI hash algorithm, a hash function may be applied to the IP address or URI of incoming requests. The service to which requests are routed may depend on the hash functions result. Using the least connections algorithm, requests may be directed to the service with the fewest concurrent connections. Using the least response time algorithm, requests may be sent to the service with the quickest response time.

The routing component may function as a mediator between client computing devices and services. The client computing device may interact with the routing component in order to reach the services (e.g., one of the plurality of services). More specifically, it might not be possible for the client computing device to interact with or reach one of the services (e.g., one of the plurality of services) without going through the routing component.

The routing component may include and/or manage the cache. For example, the routing component may use the cache to respond to requests independently of services behind the routing component. Services behind the routing component (e.g., the plurality of services) may refer to services managed by the routing component or services which are accessible via the routing component.

The routing component may provide one or more of the following: antivirus, packet filtering, URL rewriting.

The routing component may forward requests to services behind the routing component and/or conceal services behind routing component from client computing devices. Since the client computing device interacts with one routing component rather than multiple services, client code may be simplified and the number of API requests to services may be reduced.

The routing component may perform protocol translation, e.g., the routing component may convert extensible markup language (XML) to JavaScript object notation (JSON) or remote procedure calls (e.g., gRPC) to JSON.

The routing component may perform one or more of the following: authentication, authorization, monitoring, logging, Hypertext Transfer Protocol (HTTP) request attribute validation, rate limiting (e.g., requests exceeding the time limit may be declined), path matching, protocol conversion, error handling, circuit breaking.

In some cases, the other service may have a first type. The first service may have a second type. The first type may be different from the second type. The first type may be monolithic. The second type may be microservice or service-oriented architecture. Alternatively, the second type may be macroservice. The first service may include (e.g., be implemented as) a plurality of microservices or a plurality of macroservices. The other service may include (e.g., be implemented as) a monolithic service.

A macroservice differs from a microservice in that multiple macroservices may share the same data store, whereas microservices might not share data stores (e.g., each microservice may have a separate data store) or microservice data is separated in other way (e.g., multitenancy).

A macroservice may differ from a monolithic service in that the macroservice is modular.

Macroservices may also be referred to as miniservices.

The routing component may be responsible for routing the request to at least one service having the second type and at least one service having the first type. However, there may be many services having the second type and many services having first type. Hence, determining whether to send the request to the first service of the plurality of services may be implemented by determining whether to send the request to any service of the plurality of services having the second type.

Processing the request by a service having the microservice type (e.g., the first service) rather than a service having the monolithic type (e.g., the other service) may have various advantages, particularly when the service having the microservice type is comprised of a plurality of microservices.

For example, the service having the microservice type may be easier to update than the service having the monolithic type. For example, since the service having the microservice type is comprised of a plurality of microservices, one of the microservices may be updated without affecting any of the other microservices. This is in contrast to the service having the monolithic type, where any update to the service having the monolithic tyle may involve updating the entire monolithic service.

As another example, the service having the microservice type may be more fault-tolerant than the service having the monolithic type. For example, when the service having the microservice type is comprised of a plurality of microservices, if one of the microservices fails then a client computing device may still interact with other microservices, such that at least part of the functionality of the service is still accessible in spite of the microservice failure. This is in contrast to the service having the monolithic type, where any failure of part of the service causes the entire service to fail and no functionality of the service is available after the failure.

In view of the advantages discussed above with regard to processing the request by the first service rather than processing the request by the other service, it may be advantageous to send the request for the resource to the first service in order to assess whether the request can be processed by the first service before sending the request to the other service. In other words, it may be advantageous to carry out as much processing as possible via a service having the microservice type (e.g., the first service of the plurality of services) and as little processing as possible via a service having the monolithic type (e.g., one of the other services of the plurality of services).

The request may be an application layer protocol request.

The request may include a URI. In the context of the present disclosure, a URI may comprise (e.g., the URI may be) a URL. The request may use HTTP. For example, the request may be an HTTP request, e.g., an HTTP request including the POST method. The request may use a representational state transfer (REST) application programming interface (API). An exemplary request may include one or more of the following: a method (e.g., an HTTP method), a URI (e.g., a URL), a body (e.g., payload). The body may include a context and/or a definition identifier (i.e., definition ID). The context may include one or more variables. Each of the variables may have a corresponding value. Hence, the exemplary request may include one or more of the following:
- method: POST
- URL: https://rila-consumer-8l50cwt3.dev-eu10.build.cloud.sap/api/v1/workflow-instances
- Body: {"context":{"var1": "test", "var2": "test2"}, "definitionld": "project1.workflowDef"}

The definition ID may have one or more of the following properties:
data type: string
*minLength: 1*
*maxLength: 64*

Hence, the definition ID may have a data type of string, a minimum length of 1 character and a maximum length of 64 characters.

Each service of the plurality of services may be accessible via the same REST API and/or each service of the plurality of services may be accessible via the same URI. Hence, when the client sends a request for resource to the routing component and receives a response to the request including a result via the routing component, it may be invisible to the client which service of the plurality of services processes the request and produces the result.

In the context of the present disclosure the REST API may ensure that the same piece of data, such as the name or email address of a user, belongs to only one URI. REST APIs may communicate through HTTP requests to perform database functions like creating, reading, updating and deleting records within a resource. Via a REST API it may be possible to do one or more of the following: use an HTTP GET request to retrieve a record, use an HTTP POST request to create a new record, use an HTTP PUT request to update a record, and use an HTTP DELETE request to delete a record. Any HTTP method can be used in a REST API call.

The plurality of services may include a second service and a third service. The other service may be the second service. Further services beyond the third service (e.g., fourth, fifth, sixth, etc.) may be provided to form a chain of services.

Determining whether to send the request for the resource to the first service may be carried out based on whether the request for the resource has been previously received. More specifically, determining whether to send the request to the first service may comprise determining whether an indication of the request has been recorded. When the indication of the request has been recorded, determining to route the request based on the indication of the request. When the indication of the request has not been recorded, determining to send the request to the first service.

The indication of the request may be recorded in the cache. The cache may be a software or hardware memory component that stores data so that future requests for that data can be served faster. The buffering provided by the cache may benefit one or both of latency and throughput.

The cache may contain identifiers of requests that cannot be processed by the first service. For example, the cache may contain request URIs or definition IDs of requests that cannot be processed by the first service. The request URI may include the definition ID of the request. More specifically, the definition ID of the request may be the unique part of the request URI. The URIs may be mapped to aliases of other services of the plurality of services that can process requests corresponding to the URIs.

The determining of whether to send the request of the first service may be based on whether the indication of the request has been recorded in the cache. Accordingly, once the request for the resources has been received, the cache may be checked to determine whether the request should be routed to the other service of the plurality of services.

Routing the request based on the indication of the request may comprise determining to route (e.g., send) the request to the other service. The indication of the request may include an identifier of the request, e.g., a request identifier of the request and/or a definition identifier of the request.

The request may include a header and a body (e.g., payload). The header of the request may include metadata of the request (e.g., information about a resource and/or about the client computing device) and may have a specification (e.g., as part of a protocol) or format to allow for parsing. The header may include a networking protocol header. More specifically, the header may include one or more of an Internet Protocol (IP) header, a transmission control protocol (TCP) header, and HTTP header. The body of the request may include the indication of the request.

The response to the request comprises a response code (e.g., a response status code or status code) and/or an alias of the other service. Routing the request to the other service based on the response comprises using the response code and/or the alias of the other service to route the request.

For example, the alias of the second service may be derived from a first property of the resource specified by the request and the first service may respond to the request with the alias of the second service based on the property of the resource.

The response code may indicate that the first service cannot process the request. More specifically, the response code may be a redirection message. In addition or alternatively, the response to the request may include a hint specifying the other service (e.g., the alias of the other service). The response code may be an HTTP response code or an HTTP status code. More specifically, the response code may be an HTTP redirection response code. For example, the response code may be an HTTP response code within the range of 300 to 399. Accordingly, the first digit of the response code may define a class of the response code as redirection. In an example, the response code may include 300. The response code may include a header, e.g., "x-app-location". Hence, the response code may include one or more of the following:
HTTP code: 300
x-app-location: workflow-service

In addition or alternatively, the other service (e.g., the second service) may process the request or respond to the request with the alias of yet another service (e.g., the third service). For example, the other service may process the request if the other service is capable of processing the request. In addition or alternatively, the other service may respond to the request with the alias of yet another service, if the other service is unable to process the request. For example, the alias of the third service may be derived from a property of a resource specified by the request and the other service may respond to the request with the alias of the third service based on the property of the resource.

Processing the request, e.g., by the first service or the other service, may include providing the resource specified by the request to the requestor, e.g., providing the resource referred to by the URI of the request to the client.

According to a second aspect, a computer program is provided. The computer program comprises instructions that, when the program is executed by a computer, cause the computer to carry out any of the methods described above.

According to a third aspect, a computer readable medium is provided. The computer readable medium stores the computer program described above.

According to a fourth aspect, a computer system for determining which service of a plurality of services will process a request for a resource is provided. The system comprises a first computing device configured to execute a first service of the plurality of services. The system further comprises a second computing device configured to execute another service of the plurality of services. The system further comprises a third computing device configured to execute a routing component. The routing component is configured to receive a request for a resource and determine whether to send the request to the first service. When it is determined to send the request to the first service, the routing component is further configured to send the request of the first service. The first service is configured to assess whether the first service can process the request.

When the first service can process the request, the first service is configured to process the request. When the first service cannot process the request, the first service is further configured to respond to the request; in addition, the routing component is configured to receive the response and route the request to the other service based on the response.

The subject matter described in this disclosure can be implemented as a method or on a device, possibly in the form of one or more computer programs (e.g., computer program products). Such computer programs may cause a data processing apparatus to perform one or more operations described in the present disclosure.

The subject matter described in the present disclosure can be implemented in a data signal or on a machine readable medium, where the medium is embodied in one or more information carriers, such as an optical storage device (e.g., CD-ROM, DVD-ROM), magnetic tape, a semiconductor memory, or a hard disk. In particular, disclosed subject matter may be tangibly embodied in a non-transitory machine (computer) readable medium, such that signals and carrier waves are excluded.

In addition, the subject matter described in the present disclosure can be implemented as a system including at least one processor, and a memory coupled to the at least one processor. The memory may encode one or more programs to cause the processor to perform one or more of the methods described in the application. Further subject matter described in the present disclosure can be implemented using various machines.

Details of one or more implementations are set forth in the exemplary drawings and description that follow. Other features will be apparent from the description, the drawings, and from the claims.

### Brief description of the drawings

Figure 1 shows components of a computer system for determining which service of a plurality of services will process a request for a resource.
Figure 2 shows an alternative computer system for determining which service of a plurality of services will process a request for a resource.
Figure 3 shows a flow diagram of a method for determining which service of a plurality of services will process a request for resource.
Figure 4 shows a computer system that may be used to implement aspects of the present disclosure.

### Detailed description

In the following text, a detailed description of examples will be given with reference to the drawings. Various modifications to the examples may be made. In particular, one or more elements of one example may be combined and used in other examples to form new examples.

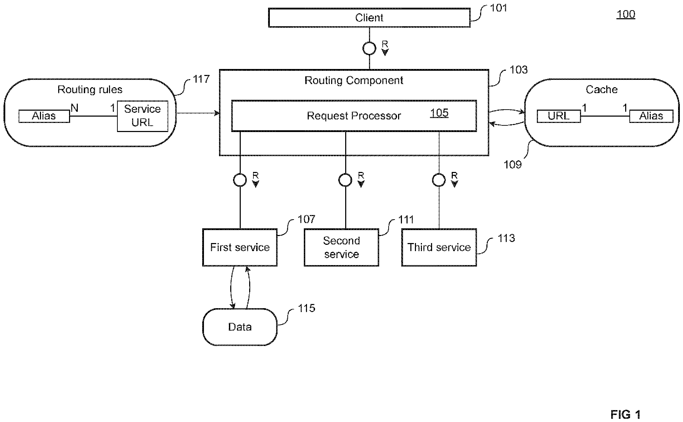

Figure 1 shows a computer system 100 for determining which service of a plurality of services will process a request for a resource. For example, a client 101 (e.g., a client computing device) may send a request for a resource to a routing component 103. The routing component 103 may include a request processor 105 to process the request for the resource. The request for the resource may identify the resource using a URI. A reference to "the request" may refer to the request for the resource unless otherwise indicated. The request processor 105 may include at least one processing unit, e.g., a central processing unit and/or a graphics processing unit.

The plurality of services may include a first service 107, a second service 111, and a third service 113. The second service 111 or the third service 113 may be referred to as another service or the other service. The first service 107 may be implemented via a plurality of microservices. The second service 111 may be implemented via a single monolithic service and/or the third service 113 may be implemented via a single monolithic service, where the single monolithic service implementing the second service 111 differs from the single monolithic service implementing the third service 113.

The routing component 103 may include (e.g., function as) an API gateway. The routing component 103 may include load-balancing functionality and/or reverse proxy functionality. The routing component 103 may accept all API calls (e.g., REST API calls from the client 101 and other clients) to the plurality of services, aggregate services required to fulfil the API calls (e.g., combine responses from multiple microservices of the first service 107) and return a result. The routing component 103 may perform user authentication, rate limiting, monitoring, collection of statistics and other services.

The API gateway of the routing component 103 may be implemented as a Spring Cloud Gateway.

The routing component 103 may determine whether to send the request for the resource to the first service 107. The routing component 103 may determine whether to send the request for the resource to the first service 107 based on whether the request for the resource has been previously received. The request for the resource may have been previously received from the client 101 or another client (not shown). Determining whether to send the request to the first service 107 (e.g., determining whether the request for the resource has been previously received) may include determining whether an indication of the request has been recorded. For example, the request may have been recorded in a cache 109. Accordingly, determining whether the indication of the request has been recorded may include checking the cache 109 for the URI of the request for the resource. The URI of the request for the resource may be mapped to an alias indicating a service to which the request should be routed. The cache 109 may be implemented via a storage device and/or the cache 109 may be managed by the routing component 103.

The URI of the request for the resource have the following form:
https://www.routingcomponent.com/resourceID

In the URI of the request for the resource, www.routingcomponent.com may be an address (e.g., hostname) of the routing component 103 and the resourcelD may be an identifier of a requested resource in the request for the resource. The routing component 103 may use a service URI to send the request for the resource to the first service 107. The service URI may replace the address of the routing component 103 with an address (e.g., hostname) of the first service 107. In some cases, the service URI is not exposed to clients, such as the client 101. A service URI for the first service 107 may have the following form:
https://www.firstservice.com/resourceID

The resourcelD of the service URI may differ from the resourcelD of the URI of the request for the resource.

Hence, the computer system 100 may include the client 101, the routing component 103, the first service 107, the second service 111, and the third service 113. The computer system 100 may further include the cache 109.

When the indication of the request has been recorded, the request may be routed based on the indication of the request. For example, when the URI of the request is recorded in the cache 109 and mapped to an alias indicating the second service 111, the request may be routed to the second service 111 without sending the request to the first service 107 or assessing whether the first service 107 can process the request. Accordingly, the cache 109 may be used to speed up processing of the request and/or more efficiently process the request.

When it is determined to send the request to the first service 107 (e.g., because the URI of the request is not in the cache 109), the request may be sent to the first service 107. The first service 107 may assess whether the first service can process the request. For example, the first service 107 may search data 115 (e.g., a data store or database accessible to the first service 107 via a computer network) for a request identifier of the request. The request identifier may include a definition identifier, e.g., a definition identifier of a workflow. The definition identifier of the workflow may also be referred to as an identifier of the workflow definition.

When the request identifier of the request is found, the first service 107 may determine that the first service 107 can process the request. In this case, the first service 107 processes the request. Hence, when the definition identifier of the workflow included in the request is known to the first service 107, it may be that the first service 107 can process the request. When the definition identifier of the workflow included in the request is not known to the first service 107, it may be that the first service 107 cannot process the request.

When the request identifier of the request is not found, the first service 107 may determine that the first service 107 cannot process the request. In this case, the first service 107 responds to the request. In other words, the first service 107 may send a response to the request to the routing component 103. For example, the response to the request from the first service 107 may include a response code (e.g., an HTTP response code or HTTP status code) and/or an alias of another service, e.g., the second service 111 or the third service 113. The other service may have a different type than the first service 107. For example, the first service 107 may have a microservice type. The second service 111 and/or the third service 113 may have a monolithic type.

Advantageously, by means of the routing component 103, the client 101 may have access the first service 107, the second service 111 and the third service 113 even though the client only needs to know one URI (as opposed to URIs for each of the services). Also, the client 101 does not need to track which service has which resources. Put another way, the request for the resource may include (e.g., be limited to) information regarding the routing component (e.g., an address, IP address or hostname) and information regarding a resource of a service managed by the routing component (e.g., an identifier of the resource). The request for the resource might not include information regarding a specific service.

Further advantageously, because of the alias provided with the response from the first service 107, the routing component 103 is simpler and easier to maintain since the routing component 103 does not need to store information mapping resources to services.

When responding to the request, the first service 107 may be understood to communicate indirectly with another service of the plurality of services, e.g., the second service 111 or the third service 113. Specifically, the first service 107 may communicate indirectly with the second service 111 or the third service 113 via the routing component 103. In other words, the indirect communication between the first service 107 and the other service of the plurality of services may involve communication between the first service 107 and the routing component 103 and further communication between the running component 103 and the other service.

The request may be routed to the other service referred to by the alias based on the response from the first service 107. More specifically, the routing component 103 may use routing rules 117 to determine where to route request, i.e., to determine which other service to route the request to. For example, the alias provided by the first service may be mapped to a URI (e.g., service URL) pointing to another service, e.g., the second service 111 or the third service 113. More specifically, if the alias provided by the first service 107 to the routing component 103 is mapped to the second service 111 in one of the routing rules 117, then the routing component 103 may route the request to the second service 111. After the request is routed to the other service (e.g., the second service 111), the other service may process the request. Alternatively, if the other service is unable to handle the request, the other service may respond to the request with an alias of yet another service, e.g., an alias of the third service 113.

The routing component 103 may store the routing rules 117.

Communication between the components of the computer system 100 may be carried out using an application layer protocol, e.g., HTTP. In the context of the present disclosure, HTTP may be implemented using Hypertext Transfer Protocol Secure (HTTPS).

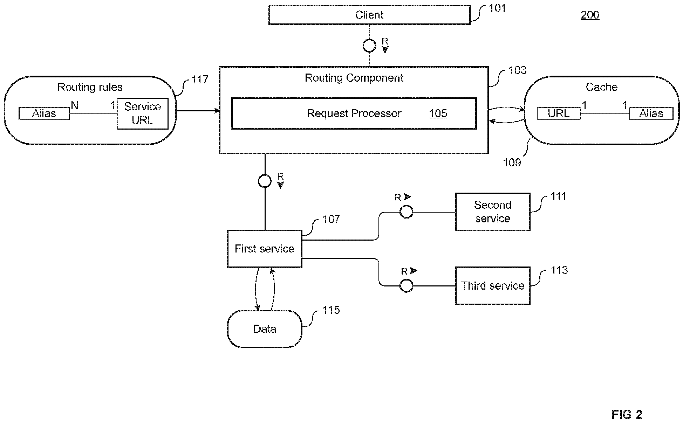

Figure 2 shows an alternative computer system 200 for determining which service of a plurality of services will process a request for a resource. Unless otherwise indicated, the components of the alternative computer system 200 of figure 2 correspond to the components of the computer system 100 discussed with regard to figure 1. Accordingly, the alternative computer system 200 includes the client 101, the routing component 103 with the request processor 105, the first service 107, the second service 111 and the third service 113. The alternative computer system 200 may further include the cache 109, the data 115 and the routing rules 117. As indicated with regard to figure 1, the cache 109 may be implemented via a storage device managed by the routing component 103. The data 115 may be accessible to the first service 107 via a computer network. The routing rules 117 may be stored by, accessible to and/or used by the routing component 103. In addition, the first service 107, the second service 111, and the third service 113 may be accessible via the same REST API.

The alternative computer system 200 differs from the computer system 100 in that the first service 107 communicates directly with the second service 111 and the third service 113, rather than indirectly as in figure 1.

Hence, when the first service 107 cannot process the request for the resource, the first service 107 may act as a proxy, rather than sending a response to the request to the routing component 103. In other words, when the first service 107 cannot process the request for the resource, the first service 107 may forward the request to another service of the plurality of services, e.g., the second service 111 or the third service 113, rather than sending a response to the request to the routing component 103.

The other service may then process the request. After processing the request, the other service may return a result via the first service 107 and the routing component 103; the routing component 103 may forward the result to the client 101. Alternatively, the other service might not be able to handle the request. In this case, the other service may respond to the request with an alias of yet another service, e.g., an alias of the third service 113.

Processing the request, e.g., by the first service or the other service, may include obtaining the resource specified by the request and providing the resource to the requestor, e.g., providing the resource to the client 101.

In comparison to the alternative computer system 200, the computer system 100 may have various advantages. Specifically, when the first service 107 acts as a proxy, acting as a proxy may reduce the performance of the first service 107. In addition, the proxy role of the first service 107 may reduce the fault tolerance of the alternative computer system 200 in comparison to the computer system 100, since the alternative computer system 200 is unable to process requests (e.g., via the second service 111 or the third service 113) if the first service 107 fails. In contrast to the alternative computer system 200, the computer system 100 can continue to process requests via the second service 111 or the third service 113 even if the first service 107 fails.

Moreover, in the computer system 100, the client 101 may be unaware of a failure of the first service 107 since requests to the REST API used to access the first service 107 may still be handled by the second service 111 or the third service 113.

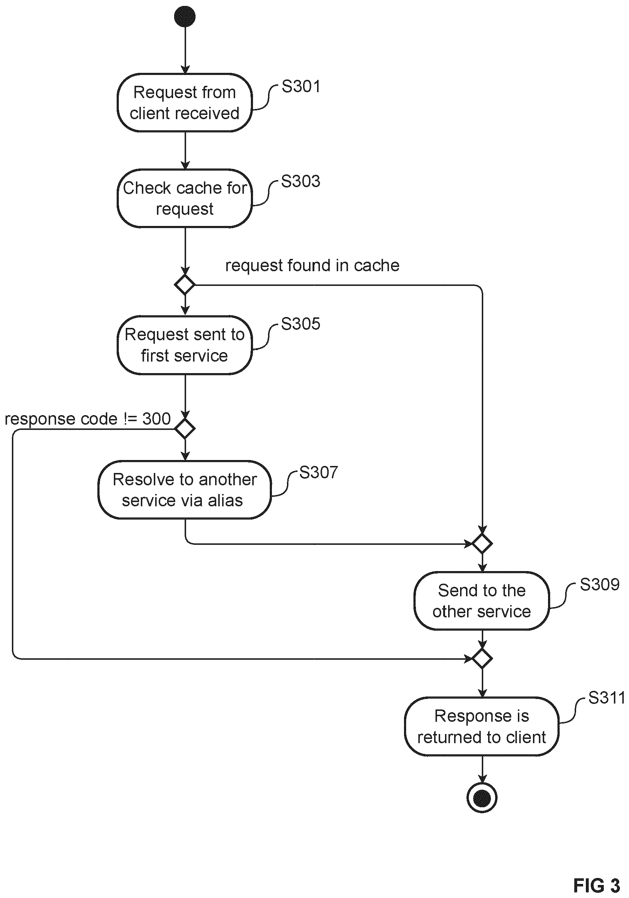

Figure 3 shows a flowchart of a method for determining which service of a plurality of services will process a request for a resource.

At step S301, the method comprises receiving the request for the resource. The request for the resource may be received from the client 101. The client 101 may be referred to as a caller and may be implemented via the client computing device. The request for the resource is received at the routing component 103.

At step S303, the method further comprises determining whether to send the request to a first service of the plurality of services, e.g., to the first service 107. Determining whether to send the request to the first service 107 may comprise determining whether an indication of the request has been recorded. Determining whether the indication of the request has been recorded may comprise checking the cache 109 for the request. The determining is carried out by the routing component 103.

When the indication of the request has not been recorded (e.g., the request is not found in the cache 109), the request may be sent to the first service 107 at step S305. The method may further comprise assessing, by the first service 107, the first service 107 can process the request. When the first service 107 can process the request (i.e., the assessment by the first service 107 is positive), the first service 107 processes the request. After processing the request, the first service 107 may respond to the request. The response of the first service 107 may include a response code (e.g., an HTTP response code or an HTTP status code). The response code may indicate successful processing of the request. The response of the first service 107 is provided to the routing component 103. The routing component 103 may process the response of the first service 107 and return a corresponding response to the client 101 at step S311.

When the first service 107 cannot process the request, the response to the request by the first service 107 may indicate that the request could not be successfully processed. When the response code does not indicate successful processing of the request (e.g., the response code indicates that further action needs to be taken in order to complete the request), the method may further comprise step S307. For example, step S307 may be carried out when the response code is 300. In this case, the response of the first service 107 may include a header. For example, the header may include "x-app-location". The header may specify an alias of another service of the plurality of services, e.g., the second service 111 or the third service 113. The header may be an HTTP header.

The method comprises routing the request to the other service of the plurality of services based on the response from the first service 107. More specifically, the request may be routed based on the alias of the other service specified in the header of the response from the first service 107. Even more specifically, the request may be routed to a service (e.g., the second service 111 or the third service 113) referred to in the alias specified in the header of the response from the first service 107. The routing is carried out by the routing component 103. Upon receipt of the request, the other service (e.g., the second service 111) may process the request or respond to the request with an alias of yet another service (e.g., the third service 113), as described above.

When the indication of the request has been recorded (e.g., in the cache 109), step S309 may be carried out and the request may be routed to another service based on the indication of the request. For example, the indication of the request may comprise a mapping of a URL of the request to an alias of a service. Accordingly, routing the request based on the indication of the request may comprise routing the request to the service referred to by the alias. Determining the service referred to by the alias may comprise checking the routing rules 117 for the alias and determining a service URL corresponding to the alias. The service URL may refer to the other service (i.e., a service of the reality of services other than the first service 107), e.g., the second service 111 or the third service 113. Using the service URL**,** the routing component 103 may send the request to the other service.

Upon receipt of the request, the other service may process the request. Alternatively, if the other service is not able to handle the request, the other service may respond to the request with an alias of yet another service - which may then process the request.

At step S311, after the request is processed, a result of the processing may be provided to the routing component 103. The routing component 103 may receive the result and provide a corresponding result (e.g., based on further processing by the routing component 103) to the client 101.

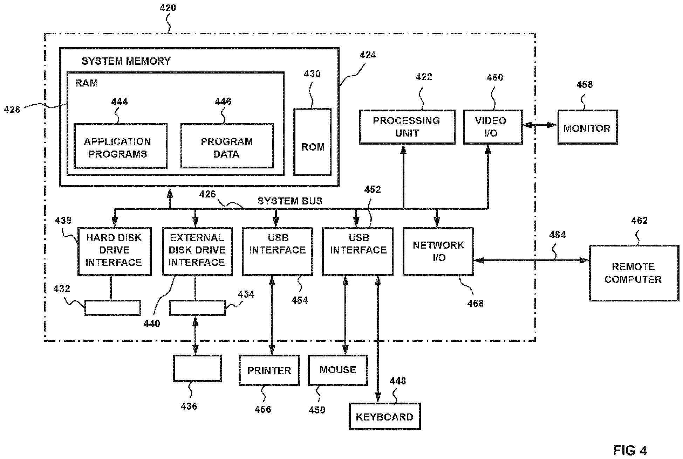

Figure 4 shows an exemplary system for implementing the claimed subject matter including a general-purpose computing device in the form of a conventional computing environment 420 (e.g., a personal computer). The conventional computing environment includes a processing unit 422, a system memory 424, and a system bus 426. The system bus couples various system components including the system memory 424 to the processing unit 422. The processing unit 422 may perform arithmetic, logic and/or control operations by accessing the system memory 424. The system memory 424 may store information and/or instructions for use in combination with the processing unit 422. The system memory 424 may include volatile and non-volatile memory, such as a random-access memory (RAM) 428 and a read only memory (ROM) 430. A basic input/output system (BIOS) containing the basic routines that helps to transfer information between elements within the computing environment 420, such as during start-up, may be stored in the ROM 430. The system bus 426 may be any of several types of bus structures including a memory bus or memory controller, a peripheral bus, and a local bus using any of a variety of bus architectures.

The computing environment 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD-ROM for an optical disk drive. The hard disk drive 432 and the external disk drive 434 are connected to the system bus 426 by a hard disk drive interface 438 and an external disk drive interface 440, respectively. The drives and their associated computer-readable media provide non-volatile storage of computer readable instructions, data structures, program modules and other data for the computing environment 420. The data structures may include relevant data for the implementation of the method for determining which service of a plurality of services will process a request for a resource, as described above. The relevant data may be organized in a database, for example a relational or object database.

Although the exemplary environment described herein employs a hard disk (not shown) and an external disk 436, it should be appreciated by those skilled in the art that other types of computer readable media which can store data that is accessible by a computer, such as magnetic cassettes, flash memory cards, digital video disks, random access memories, read only memories, and the like, may also be used in the exemplary computing environment 420.

A number of program modules may be stored on the hard disk, external disk 436, ROM 430 or RAM 428, including an operating system (not shown), one or more application programs 444, other program modules (not shown), and program data 446. The application programs may include at least a part of the functionality as depicted in Figure 1.

A user may enter commands and information, as discussed below, into the computing environment 420 through input devices such as keyboard 448 and mouse 450. Other input devices (not shown) may include a microphone (or other sensors), joystick, game pad, scanner, or the like. These and other input devices may be connected to the processing unit 422 through a universal serial bus (USB) interface 452 that is coupled to the system bus 426, or may be collected by other interfaces, such as a USB port interface 454, game port, a serial port or a parallel port. Further, information may be printed using printer 456. The printer 456, and other parallel input/output devices may be connected to the processing unit 422 through USB interface 454. A monitor 458 or other type of display device is also connected to the system bus 426 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computing environment 420 may operate in a networked environment using connections to one or more electronic devices. Figure 4 depicts the computing environment 420 networked with remote computer 462. The remote computer 462 may be another computing environment such as a server, a router, a network PC, a peer device or other common network node, and may include many or all of the elements described above relative to the computing environment 420. The logical connections depicted in Figure 4 include a local area network (LAN) 464 and a wide area network (WAN) 466. Such networking environments are commonplace in offices, enterprise-wide computer networks, intranets and the Internet and may particularly be encrypted.

When used in a LAN networking environment, the computing environment 420 may be connected to the LAN 464 through a network I/O 468. In a networked environment, program modules depicted relative to the computing environment 420, or portions thereof, may be stored in a remote memory storage device resident on or accessible to remote computer 462. Furthermore other data relevant to the computer system for determining which service of a plurality of services will process a request for a resource (described above) may be resident on or accessible via the remote computer 462. It will be appreciated that the network connections shown are exemplary and other means of establishing a communication links between the electronic devices may be used.

The above-described computing system is only one example of the type of computing system that may be used to implement the method for determining which service of a plurality of services will process a request for a resource.

## Claims

1. A computer-implemented method for determining which service of a plurality of services (107, 111, 113) will process a request for a resource, the method comprising:
receiving (S301), at a routing component (103), a request for a resource on a computer network;
determining, by the routing component, whether to send the request to a first service (107) of the plurality of services (107, 111, 113), wherein the plurality of services (107, 111, 113) are communicatively connected network services;
when it is determined to send the request to the first service (107), the method further comprises:
sending (S305), by the routing component, the request to the first service (107);
assessing, by the first service (107), whether the first service (107) can process the request;
when the first service (107) can process the request, processing, by the first service (107), the request;
when the first service (107) cannot process the request, the method further comprises:
responding, by the first service (107), to the request, wherein the response to the request comprises a response code and/or an alias of another service (111, 113) of the plurality of services (107, 111, 113);
receiving, by the routing component, the response from the first service;
routing (S309), by the routing component, the request to the other service (111, 113) based on the response, comprising using the response code and/or the alias of the other service (111, 113) to route the request.

2. The method of claim 1,
wherein the routing component (103) includes one or more of the following: a load balancer, a reverse proxy, an API gateway;
wherein the routing component (103) may be a single point of entry for the plurality of services (107, 111, 113), such that a request for one of the services of the plurality of services (107, 111, 113) is received by the routing component (103) before being routed to the one of the services.

3. The method of claim 2,
wherein the routing component (103) functions at the application layer of the OSI model.

4. The method of any one of the preceding claims,
wherein the other service (111, 113) has a first type;
wherein the first service (107) has a second type;
wherein the first type is different from the second type;
wherein the first service (107) may include a plurality of microservices;
wherein the other service (111, 113) may include a monolithic service.

5. The method of any one of the preceding claims,
wherein the request is an application layer protocol request.

6. The method of any one of the preceding claims, wherein the request includes a URI, wherein the URI may comprise a URL,
wherein the request may use HTTP,
wherein the request may use a REST API.

7. The method of any one of the preceding claims, wherein each service of the plurality of services (107, 111, 113) is accessible via the same REST API and/or wherein each service of the plurality of services (107, 111, 113) is accessible via the same URI.

8. The method of any one of the preceding claims, wherein determining whether to send the request to the first service (107) comprises:
determining (S303) whether an indication of the request has been recorded;
when the indication of the request has been recorded, determining to route the request based on the indication of the request;
when the indication of the request has not been recorded, determining to send the request to the first service (107).

9. The method of claim 8,
wherein routing the request based on the indication of the request comprises determining to route the request to the other service (111, 113).

10. The method of claim 8 or 9, wherein the indication of the request includes a request identifier of the request.

11. The method of any one of claims 8 to 10, wherein the request includes a header and a body,
wherein the body of the request may include the indication of the request.

12. The method of any one of the preceding claims, wherein the response to the request comprises a response code and/or an alias of the other service (111, 113),
wherein routing the request to the other service (111, 113) based on the response comprises using the response code and/or the alias of the other service (111, 113) to route the request.

13. A computer program comprising instructions that, when the program is executed by a computer, cause the computer to carry out the method of any one of the preceding claims.

14. A computer-readable medium storing the computer program of claim 13.

15. A computer system (100) for determining which service of a plurality of services (107, 111, 113) will process a request for a resource, the system (100) comprising:
a first computing device configured to execute a first service (107) of the plurality of services (107, 111, 113);
a second computing device configured to execute another service (111, 113) of the plurality of services (107, 111, 113);
a third computing device configured to execute a routing component (103);
wherein the routing component (103) is configured to:
receive a request for a resource;
determine whether to send the request to the first service (107);
when it is determined to send the request to the first service (107), the routing component (103) is further configured to send the request to the first service (107);
wherein the first service (107) is configured to:
assess whether the first service (107) can process the request; and
when the first service (107) can process the request, process the request;
when the first service (107) cannot process the request,
the first service (107) is further configured to respond to the request, wherein the response to the request comprises a response code and/or an alias of the other service (111, 113);
wherein the routing component (103) is configured to receive the response and route the request to the other service (111, 113) based on the response, comprising using the response code and/or the alias of the other service (111, 113) to route the request.

## Patentansprüche

1. Computerimplementiertes Verfahren zum Bestimmen, welcher Dienst einer Mehrzahl von Diensten (107, 111, 113) eine Anfrage nach einer Ressource verarbeiten wird, wobei das Verfahren umfasst:
Empfangen (S301), bei einer Routing-Komponente (103), einer Anfrage nach einer Ressource auf einem Computernetzwerk;
Bestimmen, durch die Routing-Komponente, ob die Anfrage zu einem ersten Dienst (107) der Mehrzahl von Diensten (107, 111, 113) gesendet werden soll, wobei es sich bei der Mehrzahl von Diensten (107, 111, 113) um kommunikativ verbundene Netzwerkdienste handelt;
wobei, wenn bestimmt wird, die Anfrage zu dem ersten Dienst (107) zu senden, das Verfahren ferner umfasst:
Senden (S305), durch die Routing-Komponente, der Anfrage zu dem ersten Dienst (107);
Bewerten, durch den ersten Dienst (107), ob der erste Dienst (107) die Anfrage verarbeiten kann;
wenn der erste Dienst (107) die Anfrage verarbeiten kann, Verarbeiten, durch den ersten Dienst (107), der Anfrage;
wenn der erste Dienst (107) die Anfrage nicht verarbeiten kann, das Verfahren ferner umfasst:
Antworten, durch den ersten Dienst (107), auf die Anfrage, wobei die Antwort auf die Anfrage einen Antwortcode und/oder einen Alias eines weiteren Diensts (111, 113) der Mehrzahl von Diensten (107, 111, 113) umfasst;
Empfangen, durch die Routing-Komponente, der Antwort von dem ersten Dienst;
Weiterleiten (S309), durch die Routing-Komponente, der Anfrage zu dem weiteren Dienst (111, 113) auf der Basis der Antwort, umfassend die Verwendung des Antwortcodes und/oder des Alias des weiteren Diensts (111, 113) zum Weiterleiten der Anfrage.

2. Verfahren nach Anspruch 1,
wobei die Routing-Komponente (103) eines oder mehrerer der Folgenden umfasst: einen Lastverteiler, ein Reverse-Proxy, eine API-Schnittstelle;
wobei die Routing-Komponente (103) ein einzelner Eintrittspunkt für die Mehrzahl von Diensten (107, 111, 113) sein kann, so dass eine Anfrage nach einem der Dienste der Mehrzahl von Diensten (107, 111, 113) durch die Routing-Komponente (103) empfangen wird, bevor sie zu dem einen der Dienste weitergeleitet wird.

3. Verfahren nach Anspruch 2,
wobei die Routing-Komponente (103) bei der Anwendungsschicht des OSI-Modells arbeitet.

4. Verfahren nach einem der vorhergehenden Ansprüche,
wobei der weitere Dienst (111, 113) einen ersten Typ aufweist;
wobei der erste Dienst (107) einen zweiten Typ aufweist;
wobei der erste Typ von dem zweiten Typ verschieden ist;
wobei der erste Dienst (107) eine Mehrzahl von Mikrodiensten umfassen kann;
wobei der weitere Dienst (111, 113) einen monolithischen Dienst umfassen kann.

5. Verfahren nach einem der vorhergehenden Ansprüche,
wobei die Anfrage eine Anwendungsschichtprotokollanfrage ist.

6. Verfahren nach einem der vorhergehenden Ansprüche, wobei die Anfrage eine URI umfasst, wobei die URI einen URL umfassen kann,
wobei die Anfrage ein HTTP nutzen kann,
wobei die Anfrage eine REST API nutzen kann.

7. Verfahren nach einem der vorhergehenden Ansprüche, wobei auf jeden Dienst der Mehrzahl von Diensten (107, 111, 113) über die gleiche REST API zugegriffen werden kann und/oder wobei auf jeden Dienst der Mehrzahl von Diensten (107, 111, 113) über die gleiche URI zugegriffen werden kann.

8. Verfahren nach einem der vorhergehenden Ansprüche, wobei das Bestimmen, ob die Anfrage zu dem ersten Dienst (107) gesendet werden soll, umfasst:
Bestimmen (S303), ob eine Angabe der Anfrage aufgezeichnet worden ist;
wenn die Angabe der Anfrage aufgezeichnet worden ist, Bestimmen, die Anfrage auf der Basis der Angabe der Anfrage weiterzuleiten;
wenn die Angabe der Anfrage nicht aufgezeichnet worden ist, Bestimmen, die Anfrage zu dem ersten Dienst (107) zu senden.

9. Verfahren nach Anspruch 8,
wobei das Weiterleiten der Anfrage auf der Basis der Angabe der Anfrage das Bestimmen des Weiterleitens der Anfrage zu dem weiteren Dienst (111, 113) umfasst.

10. Verfahren nach Anspruch 8 oder 9, wobei die Angabe der Anfrage eine Anfragekennung der Anfrage umfasst.

11. Verfahren nach einem der Ansprüche 8 bis 10, wobei die Anfrage einen Header und einen Body umfasst,
wobei der Body der Anfrage die Angabe der Anfrage umfassen kann.

12. Verfahren nach einem der vorhergehenden Ansprüche, wobei die Antwort auf die Anfrage einen Antwortcode und/oder einen Alias des weiteren Diensts (111, 113) umfasst,
wobei das Weiterleiten der Anfrage zu dem weiteren Dienst (111, 113) auf der Basis der Antwort das Verwenden des Antwortcodes und/oder des Alias des weiteren Diensts (111, 113) zum Weiterleiten der Anfrage umfasst.

13. Computerprogramm, das Anweisungen umfasst, die, wenn das Programm durch einen Computer ausgeführt wird, bewirken, dass der Computer das Verfahren nach einem der vorhergehenden Ansprüche durchführt.

14. Computerlesbares Speichermedium, welches das Computerprogramm nach Anspruch 13 speichert.

15. Computersystem (100) zum Bestimmen, welcher Dienst einer Mehrzahl von Diensten (107, 111, 113) eine Anfrage nach einer Ressource verarbeiten wird, wobei das System (100) umfasst:
eine erste Rechenvorrichtung, die zum Ausführen eines ersten Diensts (107) der Mehrzahl von Diensten (107, 111, 113) ausgebildet ist;
eine zweite Rechenvorrichtung, die zum Ausführen eines weiteren Diensts (111, 113) der Mehrzahl von Diensten (107, 111, 113) ausgebildet ist;
eine dritte Rechenvorrichtung, die zum Ausführen einer Routing-Komponente (103) ausgebildet ist;
wobei die Routing-Komponente (103) ausgebildet ist zum:
Empfangen einer Anfrage nach einer Ressource;
Bestimmen, ob die Anfrage zu dem ersten Dienst (107) gesendet werden soll;
wobei, wenn bestimmt wird, die Anfrage zu dem ersten Dienst (107) zu senden, die Routing-Komponente (103) ferner zum Senden der Anfrage zu dem ersten Dienst (107) ausgebildet ist;
wobei der erste Dienst (107) ausgebildet ist zum:
Bewerten, ob der erste Dienst (107) die Anfrage verarbeiten kann; und
wenn der erste Dienst (107) die Anfrage verarbeiten kann, Verarbeiten der Anfrage;
wobei, wenn der erste Dienst (107) die Anfrage nicht verarbeiten kann,
der erste Dienst (107) ferner zum Antworten auf die Anfrage ausgebildet ist, wobei die Antwort auf die Anfrage einen Antwortcode und/oder einen Alias des weiteren Diensts (111, 113) umfasst;
wobei die Routing-Komponente (103) zum Empfangen der Antwort und Weiterleiten der Anfrage zu dem weiteren Dienst (111, 113) auf der Basis der Antwort ausgebildet ist, umfassend das Verwenden des Antwortcodes und/oder des Alias des weiteren Diensts (111, 113) zum Weiterleiten der Anfrage.

## Revendications

1. Procédé mis en œuvre par ordinateur permettant de déterminer quel service d'une pluralité de services (107, 111, 113) traitera une demande pour une ressource, le procédé comprenant :
la réception (S301), au niveau d'un composant d'acheminement (103), d'une demande pour une ressource sur un réseau informatique ;
le fait de déterminer, par le composant d'acheminement, s'il faut envoyer la demande à un premier service(107) de la pluralité de services (107, 111, 113), dans lequel la pluralité de services (107, 111, 113) sont des services de réseau connectés de manière communicative ;
lorsqu'il est déterminé d'envoyer la demande au premier service (107), le procédé comprend en outre :
l'envoi (S305), par le composant d'acheminement, de la demande au premier service (107) ;
le fait d'évaluer, par le premier service (107), si le premier service (107) peut traiter la demande ;
lorsque le premier service (107) peut traiter la demande, le traitement, par le premier service (107), de la demande ;
lorsque le premier service (107) ne peut pas traiter la demande, le procédé comprend en outre :
la réponse, par le premier service (107), à la demande, dans lequel la réponse à la demande comprend un code de réponse et/ou un alias d'un autre service (111, 113) de la pluralité de services (107, 111, 113) ;
la réception, par le composant d'acheminement, de la réponse en provenance du premier service ;
l'acheminement (S309), par le composant d'acheminement, de la demande à l'autre service (111, 113) sur la base de la réponse, comprenant l'utilisation du code de réponse et/ou de l'alias de l'autre service (111, 113) pour acheminer
la demande.

2. Procédé selon la revendication 1,
dans lequel le composant d'acheminement (103) comporte un ou plusieurs parmi les éléments suivants : un équilibreur de charge, un mandataire inverse, une passerelle d'API ;
dans lequel le composant d'acheminement (103) peut être un point d'entrée unique pour la pluralité de services (107, 111, 113), de telle sorte qu'une demande pour l'un des services de la pluralité de services (107, 111, 113) est reçue par le composant d'acheminement (103) avant d'être acheminée vers l'un des services.

3. Procédé selon la revendication 2,
dans lequel le composant d'acheminement (103) fonctionne au niveau de la couche d'application du modèle OSI.

4. Procédé selon l'une quelconque des revendications précédentes,
dans lequel l'autre service (111, 113) a un premier type ;
dans lequel le premier service (107) a un second type ;
dans lequel le premier type est différent du second type ;
dans lequel le premier service (107) peut comporter une pluralité de microservices ;
dans lequel l'autre service (111, 113) peut comporter un service monolithique.

5. Procédé selon l'une quelconque des revendications précédentes,
dans lequel la demande est une demande de protocole de couche d'application.

6. Procédé selon l'une quelconque des revendications précédentes, dans lequel la demande comporte un URI, dans lequel l'URI peut comprendre une URL,
dans lequel la demande peut utiliser HTTP,
dans lequel la demande peut utiliser une API REST.

7. Procédé selon l'une quelconque des revendications précédentes, dans lequel chaque service de la pluralité de services (107, 111, 113) est accessible par l'intermédiaire de la même API REST et/ou dans lequel chaque service de la pluralité de services (107, 111, 113) est accessible par l'intermédiaire du même URI.

8. Procédé selon l'une quelconque des revendications précédentes, dans lequel le fait de déterminer s'il faut envoyer la demande au premier service (107) comprend :
le fait de déterminer (S303) si une indication de la demande a été enregistrée ;
lorsque l'indication de la demande a été enregistrée, la détermination d'acheminer la demande sur la base de l'indication de la demande ;
lorsque l'indication de la demande n'a pas été enregistrée, la détermination d'envoyer la demande au premier service (107).

9. Procédé selon la revendication 8,
dans lequel l'acheminement de la demande sur la base de l'indication de la demande comprend la détermination d'acheminer la demande vers l'autre service (111, 113).

10. Procédé selon la revendication 8 ou 9, dans lequel l'indication de la demande comporte un identificateur de demande de la demande.

11. Procédé selon l'une quelconque des revendications 8 à 10, dans lequel la demande comporte un en-tête et un corps,
dans lequel le corps de la demande peut comporter l'indication de la demande.

12. Procédé selon l'une quelconque des revendications précédentes, dans lequel la réponse à la demande comprend un code de réponse et/ou un alias de l'autre service (111, 113),
dans lequel l'acheminement de la demande vers l'autre service (111, 113) sur la base de la réponse comprend l'utilisation du code de réponse et/ou de l'alias de l'autre service (111, 113) pour acheminer la demande.

13. Programme informatique comprenant des instructions qui, lorsque le programme est exécuté par un ordinateur, amènent l'ordinateur à effectuer le procédé selon l'une quelconque des revendications précédentes.

14. Support lisible par ordinateur stockant le programme informatique selon la revendication 13.

15. Système informatique (100) permettant de déterminer quel service d'une pluralité de services (107, 111, 113) traitera une demande pour une ressource, le système (100) comprenant :
un premier dispositif informatique configuré pour exécuter un premier service (107) de la pluralité de services (107, 111, 113) ;
un deuxième dispositif informatique configuré pour exécuter un autre service (111, 113) de la pluralité de services (107, 111, 113) ;
un troisième dispositif informatique configuré pour exécuter un composant d'acheminement (103) ;
dans lequel le composant d'acheminement (103) est configuré pour :
recevoir une demande pour une ressource ;
déterminer s'il faut envoyer la demande au premier service (107) ;
lorsqu'il est déterminé d'envoyer la demande au premier service (107), le composant d'acheminement (103) est en outre configuré pour envoyer la demande au premier service (107) ;
dans lequel le premier service (107) est configuré pour :
évaluer si le premier service (107) peut traiter la demande ; et
lorsque le premier service (107) peut traiter la demande, traiter la demande ;
lorsque le premier service (107) ne peut pas traiter la demande,
le premier service (107) est en outre configuré pour répondre à la demande, dans lequel la réponse à la demande comprend un code de réponse et/ou un alias de l'autre service (111, 113) ;
dans lequel le composant d'acheminement (103) est configuré pour recevoir la réponse et acheminer la demande vers l'autre service (111, 113) sur la base de la réponse, comprenant l'utilisation du code de réponse et/ou de l'alias de l'autre service (111, 113) pour acheminer la demande.
